# EUROPÄISCHE PATENTANMELDUNG

(11) **EP 4 498 196 A1**
(43) Veröffentlichungstag der Anmeldung: **29.01.2025**
(21) Anmeldenummer: 23188145.9
(22) Anmeldetag: 27.07.2023
(51) Int. Cl.: G05B 23/02, G05B 13/02, G05B 13/04, G06N 3/092

(54) **VERFAHREN ZUM ERZEUGEN EINER VERHALTENSPROGNOSE EINES GERÄTS, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Hahn, Christian, 91315 Höchstadt a.d. Aisch (DE); Hentschel, Anja, 81735 München (DE); Saft, Matthias, 82140 Olching (DE)
(74) Vertreter: Siemens Patent Attorneys

(57) **Zusammenfassung**

Die Erfindung betrifft ein Verfahren zum Erzeugen einer Verhaltensprognose (16) eines Gerätes (18) mittels einer elektronischen Recheneinrichtung (10), mit den Schritten:
- Bereitstellen eines Initialmodells des Geräts (18) mittels der elektronischen Recheneinrichtung (10);
- Erfassen von zumindest einem das Gerät (18) aktuell charakterisierenden Verhaltensparameters (24) mittels einer Erfassungseinrichtung (12) der elektronischen Recheneinrichtung (10) ;
- Adaptieren des Initialmodells in Abhängigkeit von dem erfassten Verhaltensparameter (24) zu einem Verhaltensmodell (28) des Geräts (18) mittels der elektronischen Recheneinrichtung (10);
- Erfassen eines Simulationsparameters (40, 42) für das Gerät (18) mittels einer weiteren Erfassungseinrichtung (14) der elektronischen Recheneinrichtung (10);
- Auswerten des Verhaltensmodells (28) in Abhängigkeit von dem Simulationsparameter (40, 42) mittels der elektronischen Recheneinrichtung (10); und
- Erzeugen der Verhaltensprognose (16) in Abhängigkeit von der Auswertung mittels der elektronischen Recheneinrichtung (10) .

Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Erzeugen einer Verhaltensprognose eines Geräts mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Vorhersagen über das zu erwartende Verhalten eines individuellen physischen Gerätes unter Berücksichtigung der Historie dieses individuellen Gerätes sind bereits bekannt. Insbesondere zu Beginn der Lebensdauer eines Gerätes kann dessen zu erwartendes Verhalten anhand von Modellen gut vorhergesagt werden. Durch ihre Benutzung verändert sich jedoch das Verhalten physischer Geräte, zum Beispiel Motoren oder Triebwerke, aber auch elektronische Bauteile, im Laufe der Zeit und das Verhalten weicht mit zunehmender Betriebsdauer des Geräts immer weiter von dem Vorhergesagten der Modelle ab. Ursache der Verhaltensänderung sind beispielsweise äußere Einflüsse, denen das Gerät während des Betriebs unweigerlich ausgesetzt ist. Diese Einflüsse sind beispielsweise zum Teil erfassbare Einflüsse, wie zum Beispiel Steuerungseingaben oder bestimmte Umgebungseinflüsse, wie beispielsweise Temperatur, Luftdruck oder mechanischer Widerstand, und zum Teil auch nicht oder nur schwer erfassbare Einflüsse, wie zum Beispiel die Abnutzung oder Verschmutzung. Während der Lebensdauer eines Gerätes ist es immer wieder erforderlich, Entscheidungen über den Einsatz dieses Gerätes zu treffen. Zum Beispiel soll unter Berücksichtigung des tatsächlichen Zustandes und der tatsächlichen Leistungsfähigkeit des Gerätes entschieden werden, ob beispielsweise ein Gerät einer Wartung unterzogen oder außer Dienst gestellt werden muss, ob das Gerät für eine bestimmte Aufgabe noch einsatzfähig ist, oder welches von mehreren Geräten für einen bestimmten Einsatz am besten geeignet ist. Da die oben beschriebenen Einflüsse, die seit der Inbetriebsetzung des Geräts auf das Gerät eingewirkt haben, nicht vollständig erfassbar sind, können solche Entscheidungen bisher nur mithilfe von Modellen, Erfahrungen von Experten und Annahmen getroffen werden. Diese Art der Entscheidungsfindung ist mit großen Unwägbarkeiten behaftet und birgt erhebliche Risiken, beispielsweise wirtschaftliche Schäden oder Gefährdung von Personen. Um diese Risiken zu begrenzen, werden im Stand der Technik oftmals Sicherheits-Margen erheblich höher angesetzt als eigentlich erforderlich, und Geräte früher instandgesetzt oder ausgetauscht als notwendig.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen eine zuverlässige Verhaltensprognose für ein Gerät erzeugt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer Verhaltensprognose eines Gerätes mittels einer elektronischen Recheneinrichtung. Es wird ein Initialmodell des Verhaltens des Geräts mittels der elektronischen Recheneinrichtung bereitgestellt. Es wird zumindest ein das Gerät aktuell charakterisierender Verhaltensparameter mittels einer Erfassungseinrichtung der elektronischen Recheneinrichtung erfasst. Es erfolgt das Adaptieren des Initialmodells in Abhängigkeit von dem erfassten Verhaltensparameter zu einem Verhaltensmodell des Geräts mittels der elektronischen Recheneinrichtung. Es wird ein Simulationsparameter für das Gerät mittels einer weiteren Erfassungseinrichtung der elektronischen Recheneinrichtung erfasst. Es erfolgt das Auswerten des Verhaltensmodells in Abhängigkeit von dem Simulationsparameter mittels der elektronischen Recheneinrichtung und das Erzeugen der Verhaltensprognose in Abhängigkeit von der Auswertung mittels der elektronischen Recheneinrichtung.

Insbesondere kann somit dem physischen Gerät ein Verhaltensdoppelgänger an die Seite gestellt werden. Insbesondere im laufenden Betrieb des Geräts lernt der Verhaltensdoppelgänger, welcher insbesondere dem Verhaltensmodell entspricht, das aktuelle Verhalten des Gerätes. Führen äußere Einflüsse zu einer Veränderung des Verhaltens, passt sich der Verhaltensdoppelgänger mit kurzer Verzögerung daran an, lernt insbesondere mit. Zur Entscheidungsfindung wird beispielsweise der Verhaltensdoppelgänger verwendet. Zu erwartendes Verhalten des Geräts wird auf der Basis des aktuell gelernten Verhaltens vorhergesagt beziehungsweise simuliert.

Bei der Erfassungseinrichtung kann es sich beispielsweise um einen Temperatursensor, Spannungssensor, Stromsensor, Drehzahlmesssensor oder dergleichen handeln, welche das Gerät entsprechend charakterisieren und beschreiben. Bei der weiteren Erfassungseinrichtung kann es sich beispielsweise um eine Eingabeeinrichtung, beispielsweise eine Tastatur oder dergleichen, handeln, über welche ein entsprechender Simulationsparameter zum Simulieren des Geräts beziehungsweise Trainingsparameter zum Trainieren des Verhaltensmodells durch eine Person eingegeben werden kann. Insbesondere wird somit unter den Bedingungen des Simulationsparameters, welcher beispielsweise durch eine Person vorgegeben ist, die Simulation beziehungsweise die Verhaltensprognose durchgeführt.

Das Verhaltensmodell widerspiegelt somit lediglich das Verhalten des Geräts und bildet somit keinen digitalen Zwilling ab. Gegenüber dem digitalen Zwilling hat das Verhaltensmodell den Vorteil, dass dieses wesentlich recheneffizienter arbeiten kann, da nicht jegliche Funktion, wie im digitalen Zwilling, simuliert werden muss, sondern es wird lediglich das Verhalten auf Basis des vorhanden Modells und der entsprechenden Parameter abgebildet. Somit handelt es sich bei dem Verhaltensmodell um ein von einem digitalen Zwilling unabhängigen Modell. Beispielsweise können ein digitaler Zwilling und das Verhaltensmodell parallel für das Gerät ausgebildet sein.

Gemäß einer vorteilhaften Ausgestaltungsform wird zumindest ein Verhaltensparameter kontinuierlich erfasst und das Verhaltensmodell wird kontinuierlich adaptiert. Mit anderen Worten ist vorgesehen, dass kontinuierlich während des Betriebs des Gerätes der Verhaltensparameter erfasst wird und das Verhaltensmodell entsprechend kontinuierlich angepasst wird. Somit kann hochaktuell und sehr präzise eine Verhaltensprognose des Geräts entsprechend erzeugt werden.

Es hat sich weiterhin als vorteilhaft erwiesen, wenn die erzeugte Verhaltensprognose mit einem tatsächlichen Verhalten des Geräts verglichen wird und in Abhängigkeit von dem Vergleich das Verhaltensmodell adaptiert wird. Insbesondere ist somit vorgesehen, dass sich der Verhaltensdoppelgänger laufend an das tatsächliche Verhalten des Gerätes anpasst und somit mitlernt. Dies erfolgt beispielsweise durch Messen der beobachtbaren beziehungsweise messbaren Einflüsse und Steuer-Eingaben. Nicht beobachtbare beziehungsweise messbare Einflüsse, die früher für Prognosen verloren gegangen sind, werden durch ihre Auswirkungen vom Verhaltensdoppelgänger erlernt. Der Doppelgänger macht Vorhersagen über die zu erwartende Reaktion des Gerätes auf die entsprechenden Inputs, was insbesondere einem vorhergesagten Verhalten entspricht. Es werden dann die tatsächlichen Reaktionen des Gerätes auf diese Eingaben beobachtet und gemessen/erfasst, wodurch ein tatsächliches Verhalten erfasst wird. Das beobachtete Verhalten resultiert aus den beobachtbaren und messbaren Einflüssen beziehungsweise Inputs, den nicht beobachtbaren beziehungsweise nicht messbaren Einflüssen sowie dem aktuellen Zustand des Gerätes, beispielsweise die Auswirkungen aller früheren Einflüsse und Inputs. Es wird dann eine Vorhersagegüte durch Vergleichen des vorhergesagten und des tatsächlichen Verhaltens ermittelt, was insbesondere einer Vorhersageabweichung entspricht. Der Verhaltensdoppelgänger wird dann durch Rücckopplung der Vorhersageabweichung wiederum trainiert. Somit kann hochpräzise eine Verhaltensprognose erzeugt werden.

Es hat sich weiterhin als vorteilhaft erwiesen, wenn als der Simulationsparameter ein Steuerungsparameter für das Gerät erfasst wird. Beispielsweise können entsprechende Ströme oder Drehzahlen für das Gerät vorgegeben und simuliert werden. Ferner können weitere Einflussgrößen entsprechend nachgebildet werden. Somit kann auf Basis der Steuerungsparameter eine Simulation beziehungsweise Verhaltensprognose für das Gerät erzeugt werden.

Weiterhin vorteilhaft ist, wenn als der Simulationsparameter ein Umgebungsparameter für das Gerät erfasst wird. Beispielsweise können entsprechende Umgebungstemperaturen, Luftfeuchtigkeiten oder dergleichen vorgegeben werden, welche dann wiederum bei der Simulation entsprechend berücksichtigt werden können beziehungsweise auf Basis der Vorgaben eine entsprechende Simulation beziehungsweise Erzeugen der Verhaltensprognose realisiert werden kann. Somit können unterschiedliche Reaktionen des Verhaltensmodells erzeugt werden und eine präzise Vorhersage zu dem Verhalten getätigt werden.

Eine weitere vorteilhafte Ausgestaltungsform sieht vor, dass die elektronische Recheneinrichtung mit einem neuronalen Netzwerk bereitgestellt wird. Insbesondere kann auf Basis eines neuronalen Netzwerks ein Anlernen beziehungsweise Adaptieren des Verhaltensmodells durchgeführt werden. Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ermittelte Kategorie für eine Klassifizierungsaufgabe, einen oder mehrere prädizierte Werte oder eine prädizierte Sequenz beinhalten kann.

Ebenfalls vorteilhaft ist, wenn das neuronale Netzwerk zum verstärkenden Lernen bereitgestellt wird. Bei dem neuronalen Netzwerk können insbesondere entsprechende Entscheidungen des neuronalen Netzwerks zurückgekoppelt werden. Somit kann auf Basis der bereits erzeugten Entscheidung eine Rückkopplung realisiert werden, wodurch ein äußerst präzises Anlernen des Verhaltensmodells realisiert werden kann.

Es hat sich weiter als vorteilhaft erwiesen, wenn als Verhaltensparameter ein tatsächliches Verhalten des Geräts erfasst wird. Beispielsweise können tatsächliche Drehzahlen, Spannungen oder Ströme an dem Gerät entsprechend erfasst werden. Das tatsächliche Verhalten kann nun dazu genutzt werden, um das Verhaltensmodell entsprechend zu adaptieren beziehungsweise die Vorhersagegüte des Verhaltensmodells zu prüfen. Somit kann hochpräzise das Verhaltensmodell angelernt werden.

Ferner hat es sich als vorteilhaft erwiesen, wenn aktuelle Umgebungsbedingungen beim Gerät erfasst werden und beim Adaptieren des Verhaltensmodells berücksichtigt werden. Beispielsweise können Luftfeuchtigkeit, Temperatur, Lichteinstrahlungen oder dergleichen als Umgebungsbedingungen entsprechend erfasst werden. Diese Umgebungsbedingungen werden dann beim Adaptieren des Verhaltensmodells berücksichtigt, sodass ein entsprechendes Adaptieren des Verhaltensmodells hochpräzise durchgeführt werden kann.

Ebenfalls vorteilhaft ist, wenn in Abhängigkeit von der Verhaltensprognose eine Einsatzfähigkeit des Geräts für einen spezifischen Einsatzzweck bewertet wird. Beispielsweise kann bewertet werden, ob das Gerät für den spezifischen Einsatz tauglich ist. Es können beispielsweise über den Simulationsparameter entsprechende Vorgaben für den Einsatzzweck vorgegeben werden. Auf Basis dieser Vorgaben kann wiederum überprüft werden, ob das Gerät dann für den Einsatzzweck auch einsatzfähig ist, oder ob beispielsweise ein anderes Gerät angeschafft werden müsste.

Alternativ oder ergänzend kann beispielsweise vorgesehen sein, dass unterschiedliche Geräte auf Basis der Verhaltensprognose bewertet werden, wobei dann wiederum eine Analyse derart stattfindet, welches der Geräte am besten für den vorgegebenen Einsatzzweck geeignet ist.

Es hat sich weiterhin als vorteilhaft erwiesen, wenn in Abhängigkeit von der Verhaltensprognose eine Wartung und/oder ein Wartungsintervall für das Gerät vorgeschlagen wird. Insbesondere können somit entsprechende Wartungen für das Gerät bestimmt werden, und beispielsweise einem Nutzer vorgeschlagen werden. Dadurch kann verhindert werden, dass das Gerät ausfällt beziehungsweise kann durch die Wartung die Sicherheit für Personen erhöht werden.

Ebenfalls vorteilhaft ist, wenn in Abhängigkeit von der Verhaltensprognose ein Austausch des Geräts vorgeschlagen wird. Sollte beispielsweise bestimmt werden, dass das Gerät in naher Zukunft ausfallen kann, so kann ein Austausch initiiert werden, wodurch beispielsweise Bestellvorgänge bereits frühzeitig durchgeführt werden können und lediglich eine kurze Ausfallzeit während des Austauschs zu verzeichnen ist. Somit können entsprechende Ausfallzeiten verkürzt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit einem Computerprogrammprodukt nach dem vorhergehenden Aspekt.

Ein nochmals weiterer Aspekt der Erfindung betrifft eine elektronische Recheneinrichtung zum Erzeugen einer Verhaltensprognose eines Gerätes, mit zumindest einer Erfassungseinrichtung und einer weiteren Erfassungseinrichtung, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ein Umfeldsensorsystem/Erfassungseinrichtung kann beispielsweise als Sensorsystem verstanden werden, das dazu in der Lage ist, Sensordaten oder Sensorsignale zu erzeugen, welche eine Umgebung Umfeldsensorsystems abbilden, darstellen oder wiedergeben. Insbesondere ist die Fähigkeit, elektromagnetische oder sonstige Signale aus der Umgebung zu erfassen, nicht hinreichend, um ein Sensorsystem als Umfeldsensorsystem zu erachten. Beispielsweise können Kameras, Radarsysteme, Lidarsysteme, Temperatursensoren, Feuchtigkeitssensoren, Lichtsensoren, Spannungssensoren, oder Ultraschallsensorsysteme als Umfeldsensorsysteme aufgefasst werden.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: ein schematisches Ablaufdiagramm gemäß einer Ausführungsform des Verfahrens;
- FIG 2: ein weiteres schematisches Ablaufdiagramm gemäß einer Ausführungsform des Verfahrens; und
- FIG 3: ein nochmals weiteres schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

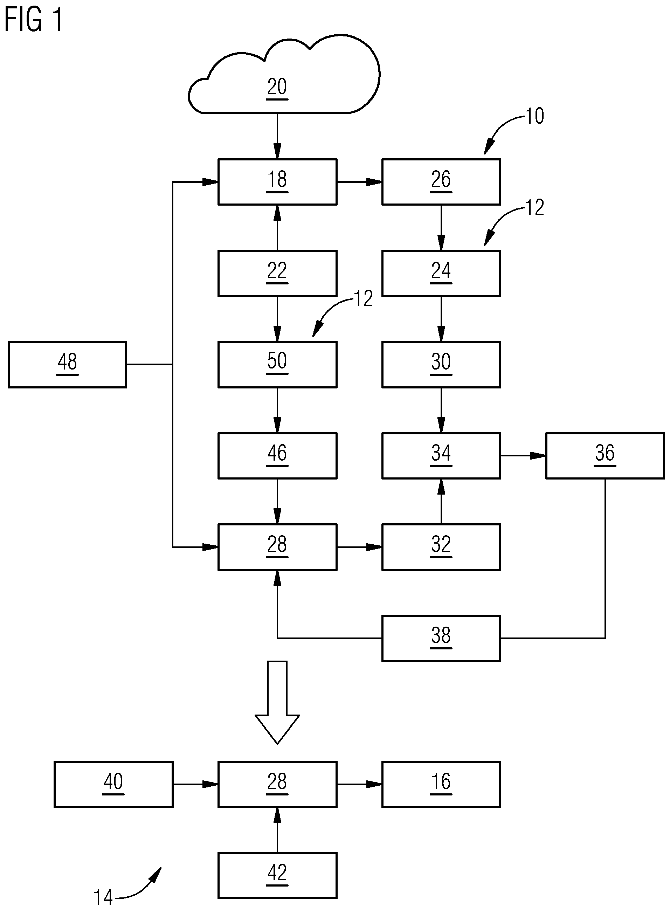

FIG 1 zeigt ein schematisches Ablaufdiagramm gemäß einer Ausführungsform des Verfahrens, insbesondere ausgeführt mit einer elektronischen Recheneinrichtung 10. Die elektronische Recheneinrichtung 10 weist zumindest eine Erfassungseinrichtung 12 sowie eine weitere Erfassungseinrichtung 14 auf. Mittels der elektronischen Recheneinrichtung 10 kann insbesondere eine Verhaltensprognose 16 eines Gerätes 18 erzeugt werden.

Die FIG 1 zeigt insbesondere, dass das Gerät 18 von unbestimmten Einflüssen 20 sowie von Umgebungseinflüssen 22 beeinflusst werden kann. Insbesondere können beispielsweise die Umgebungseinflüsse 22 mittels der Erfassungseinrichtung 12 erfasst werden, insbesondere kann ein Verhaltensparameter 24 erfasst werden. Insbesondere wird der Verhaltensparameter 24 auf Basis eines Verhaltens 26 des Gerätes 18 im tatsächlichen Betrieb erfasst. Ferner entsprechende Steuerungseingaben 48 vorgesehen, welche ebenfalls an das Gerät 18 übertragen werden.

Des Weiteren ist im vorliegenden Ausführungsbeispiel ein Verhaltensmodell 28 gezeigt. Das Verhaltensmodell 28 erfährt auch die entsprechenden Steuerungseingaben 48 sowie die gemessenen Umgebungseinflüsse 46. Insbesondere ist in der Fig. 1 hierzu ein Messen 50 gezeigt. Das Verhaltensmodell 28 ist insbesondere ein mitlernender Verhaltensdoppelgänger für das entsprechende Gerät 18. Das Verhaltensmodell 28 kann insbesondere als neuronales Netzwerk, beispielsweise als neuronales Netzwerk zum verstärkenden Lernen (Reinforcement Learning), bereitgestellt werden.

Die FIG 1 zeigt ferner, dass auf Basis des Verhaltens 26 eine entsprechende Reaktion 30 erfasst werden kann. Mittels des Verhaltensmodells 28 kann insbesondere eine vorhergesagte Auswirkung 32 vorhergesagt werden. Die Reaktion 30 kann mit der vorhergesagten Auswirkung 32 in einem Vergleich 34 verglichen werden. Eine entsprechende Übereinstimmung 36 beziehungsweise auch eine Abweichung kann dann wiederum zum Verhaltensmodell 28 als sogenanntes Reinforcement Learning 38 zurückgeführt werden.

Insbesondere kann mittels der weiteren Erfassungseinrichtung 14 ein Simulationsparameter 40, 42 erfasst werden. Der Simulationsparameter 40, 42 kann beispielsweise als Steuerungsparameter 40 und/oder als Umgebungsparameter 42 erfasst werden.

Insbesondere zeigt die FIG 1, dass dem physischen Gerät 18 das Verhaltensmodell 28 an die Seite gestellt wird. Im laufenden Betrieb des Gerätes 18 lernt das Verhaltensmodell 28 das aktuelle Verhalten 26 des Gerätes 18. Führen äußere Einflüsse zu einer Veränderung des Verhaltens 26, passt sich das Verhaltensmodell 28 mit kurzer Verzögerung daran an, insbesondere lernt dieses mit. Zur Entscheidungsfindung wird das Verhaltensmodell 28 verwendet. Das zu erwartende Verhalten 26 des Gerätes 18 wird auf Basis des aktuell gelernten Verhaltens 26 vorhergesagt beziehungsweise simuliert.

Insbesondere kann eine Kopie/Snapshot des Verhaltensmodells 28 erzeugt werden, um die Simulation durchzuführen. Insbesondere wird somit ein Verhaltensmodell 28 in Betrieb trainiert und beispielsweise mit der Kopie kann die Simulation durchgeführt werden. Insbesondere können die beiden Verhaltensmodelle 28 auf unterschiedlichen Recheninstanzen bereitgestellt werden. Die Simulation wird also in der Regel nicht in der Betriebsumgebung durchgeführt und wird daher auch nicht durch dort ggf. vorherrschende Ressourcenknappheit eingeschränkt.

Das Verhaltensmodell 28 passt sich dabei laufend an das tatsächliche Verhalten 26 des Gerätes 18 an. Dies erfolgt beispielsweise durch Messen der beobachtbaren beziehungsweise messbaren Einflüsse und Steuerungseingaben 48. Nicht beobachtbare beziehungsweise messbare Einflüsse, insbesondere die unbestimmten Einflüsse 20, die früher für Prognosen verloren gegangen sind, werden durch ihre Auswirkungen vom Verhaltensmodell 28 erlernt. Das Verhaltensmodell 28 macht eine Vorhersage über die zu erwartende Reaktion 30 des Gerätes 18 auf diese Steuerungseingaben 48. Es erfolgt ein Beobachten und Messen der tatsächlichen Reaktion 30 des Gerätes 18 auf diese Inputs, was insbesondere dem tatsächlichen Verhalten 26 entspricht. Das beobachtete Verhalten 26 resultiert aus den beobachtbaren und messbaren Einflüssen beziehungsweise Inputs, den nicht-beobachtbaren beziehungsweise nicht-messbaren Einflüssen und dem aktuellen Zustand des Gerätes 18. Es erfolgt das Ermitteln der Vorhersagegüte durch den Vergleich 34 des vorhergesagten und tatsächlichen Verhaltens 26. Das Verhaltensmodell 28 wird dann durch die Rückkopplung, beispielsweise der Vorhersageabweichung, trainiert.

Im unteren Teil der FIG 1 ist insbesondere dann wiederum die Verhaltensprognose 16 gezeigt. Das Verhaltensmodell 28 erhält die zu erwartenden messbaren Einflüsse und Steuerungsparameter 14 im zu erwartenden zeitlichen Verlauf als Eingaben. Das Verhaltensmodell 28 macht die Verhaltensprognose 16 über die zu erwartende Reaktion 30 des Gerätes 18 auf die Eingaben und Einflüsse im zeitlichen Verlauf, basierend auf dem aktuellen Lernstand des Verhaltensmodells 28. Die Verhaltensprognose 26 kann dann zur Entscheidungsfindung herangezogen werden.

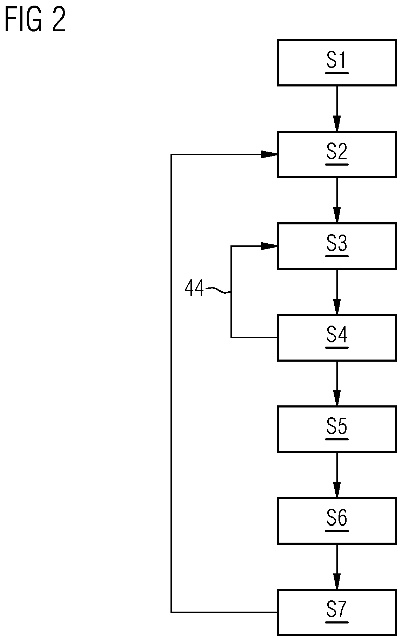

FIG 2 zeigt ein weiteres schematisches Ablaufdiagramm gemäß einer Ausführungsform des Verfahrens. FIG 2 zeigt eine beispielhafte Anwendung eines Ausführungsbeispiels, beispielsweise eines Antriebssystems. Im Ausführungsbeispiel kann beispielsweise davon gesprochen werden, ob ein Tunnelbohrer für ein entsprechendes Bauvorhaben noch geeignet ist.

Der Tunnelbohrer entspricht dabei dem Gerät 18. Das Gerät 18 weist dabei beispielsweise einen Antrieb mit Umrichter auf. In einem ersten Schritt S1 erfolgt die Inbetriebsetzung. Der Betrieb des Antriebs unter verschiedenen typischen Betriebs-/Lastszenarien mit verschiedenen Umgebungsbedingungen ist dabei vorgesehen. Es erfolgt die Beobachtung von Geräteteilen, beispielsweise Steuerungseingaben am Umrichter, wie zum Beispiel eine Soll-Drehzahl, Umgebungseinflüsse wie die Temperatur, Luftfeuchtigkeit oder mechanischer Widerstand, sowie Reaktionen, insbesondere Reaktionen vom Antrieb auf diese Parameter, beispielsweise ein Drehzahlverlauf, Drehmomentenverlauf, Temperaturverlauf, Vibration oder Klang. Diese Daten können dann wiederum dazu genutzt werden, um das Verhaltensmodell 28 zu trainieren.

Der zweite Schritt S2 beschreibt, dass das Gerät 18 bestimmungsgemäß verwendet wird, zum Beispiel der Antrieb des Tunnelbohrers.

Der dritte Schritt S3 ist wiederum im Betrieb des Gerätes 18. Das Verhalten des Geräts 18 ändert sich dabei. Bekannte Größen, zum Beispiel Betriebsdauer sowie Temperatur und Luftfeuchtigkeit sowie unbestimmbare, zum Beispiel Eigenschaften des gebohrten Materials, Verschleiß und Verschmutzung sind dabei entsprechende Faktoren.

Im vierten Schritt S4 wird das Verhaltensmodell 28 an das veränderte Verhalten 26 des realen Geräts 18 angepasst. Über einen Pfeil 44 ist insbesondere gezeigt, dass kontinuierlich über die Lebenszeit des realen Geräts 18 die Schritte S3 und S4 durchgeführt werden.

In einem fünften Schritt S5 ist eine besondere Situation aufgezeigt, beispielsweise kann die Bohrung auf ein besonders hartes Material treffen. Es ist eine Entscheidung zu treffen, ob das Gerät 18 diesem gewachsen ist. Es erfolgt nun die Erstellung einer Kopie des Verhaltensmodells 28, die dann wiederum die Simulation durchführen kann.

Im sechsten Schritt S6 wird das Verhaltensmodell 28 mit den Einflüssen aus der Spezialsituation simuliert, um das erwartete Verhalten des realen Geräts 18 vorherzusagen. Es wird das erwartete Verhalten in der Bohrsimulation durch das Verhalten des Verhaltensmodells 28 und die Beobachtung des simulierten Verhaltens 26 ersetzt.

In einem siebten Schritt S7 kann wiederum die Entscheidung über eine angemessene Reaktion 30 für das reale Gerät 18 getroffen werden, zum Beispiel ob das harte Material gesprengt werden soll oder eine vorgezogene Wartung oder der Betrieb des Gerätes 18 fortgeführt werden soll. Ausgehend vom siebten Schritt S7 kann wiederum in den zweiten Schritt S2 übergegangen werden.

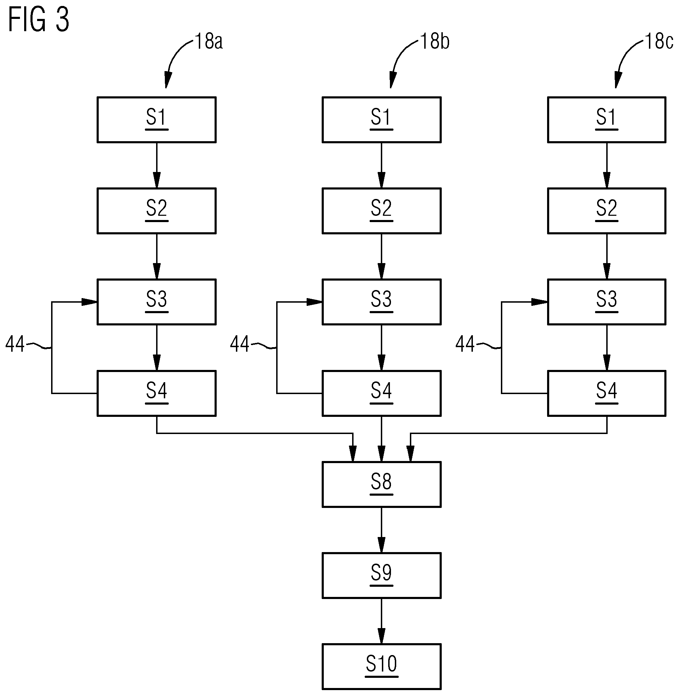

FIG 3 zeigt ein weiteres schematisches Ablaufdiagramm gemäß einer Ausführungsform des Verfahrens. In der FIG 3 ist insbesondere gezeigt, dass beispielsweise für ein spezielles Vorhaben drei unterschiedliche Geräte 18a, 18b, 18c zu bewerten sind, welches der Geräte 18a, 18b, 18c besser für dieses Vorhaben geeignet ist. Die Schritte S1 bis S4 sind wie in der FIG 2.

Nach dem vierten Schritt S4 erfolgt wiederum ein achter Schritt S8, in welchem eine Entscheidung zu fällen ist, welches Gerät 18a, 18b, 18c aus der Auswahl von Geräten 18a, 18b, 18c den Anforderungen für den Anwendungsfall am besten entspricht. Hierbei können dann wiederum entsprechende Verhaltensmodelle 28 von weiteren infrage kommenden Geräten erstellt werden, die unter ähnlichen Bedingungen betrieben worden sind.

Im neunten Schritt S9 erfolgt wiederum eine Simulation, wobei das Verhaltensmodell 28 mit Einflüssen aus zu erwartenden Spezialsituationen stimuliert wird, um das erwartete Verhalten des realen Geräts 18a, 18b, 18c vorherzusagen. Es wird das erwartete Verhalten in der Bohrersimulation durch das Verhalten der Verhaltensmodelle 28 und die Beobachtung des simulierten Verhaltens ersetzt.

Im zehnten Schritt S10 kann dann wiederum die Entscheidung gefällt werden, welche Geräte 18a, 18b, 18c infrage kommen und eine Abschätzung des Risikos durchgeführt werden, ob eventuell Bedarf für einen neuen Bohrer herrscht.

## Patentansprüche

1. Verfahren zum Erzeugen einer Verhaltensprognose (16) eines Gerätes (18) mittels einer elektronischen Recheneinrichtung (10), mit den Schritten:
- Bereitstellen eines Initialmodells des Geräts (18) mittels der elektronischen Recheneinrichtung (10);
- Erfassen von zumindest einem das Gerät (18) aktuell charakterisierenden Verhaltensparameters (24) mittels einer Erfassungseinrichtung (12) der elektronischen Recheneinrichtung (10) ;
- Adaptieren des Initialmodells in Abhängigkeit von dem erfassten Verhaltensparameter (24) zu einem Verhaltensmodell (28) des Geräts (18) mittels der elektronischen Recheneinrichtung (10);
- Erfassen eines Simulationsparameters (40, 42) für das Gerät (18) mittels einer weiteren Erfassungseinrichtung (14) der elektronischen Recheneinrichtung (10);
- Auswerten des Verhaltensmodells (28) in Abhängigkeit von dem Simulationsparameter (40, 42) mittels der elektronischen Recheneinrichtung (10); und
- Erzeugen der Verhaltensprognose (16) in Abhängigkeit von der Auswertung mittels der elektronischen Recheneinrichtung (10) .

2. Verfahren nach Anspruch 1, **dadurch gekennzeichnet, dass** der zumindest eine Verhaltensparameter (24) kontinuierlich erfasst wird und das Verhaltensmodell (28) kontinuierlich adaptiert wird.

3. Verfahren nach Anspruch 1 oder 2, **dadurch gekennzeichnet, dass**
die erzeugte Verhaltensprognose (16) mit einem tatsächlichen Verhalten des Geräts (18) verglichen wird und in Abhängigkeit von dem Vergleich (34) das Verhaltensmodell (28) adaptiert wird.

4. Verfahren nach einem der vorhergehenden Ansprüche, **dadurch gekennzeichnet, dass**
als Simulationsparameter (40 42) ein Steuerungsparameter (40) für das Gerät (18) erfasst wird.

5. Verfahren nach einem der vorhergehenden Ansprüche, **dadurch gekennzeichnet, dass**
als Simulationsparameter (40, 42) ein Umgebungsparameter (42) für das Gerät (18) erfasst wird.

6. Verfahren nach einem der vorhergehenden Ansprüche, **dadurch gekennzeichnet, dass**
die elektronische Recheneinrichtung (10) mit einem neuronalen Netzwerk bereitgestellt wird.

7. Verfahren nach Anspruch 6, **dadurch gekennzeichnet, dass** das neuronale Netzwerk zum verstärkenden Lernen bereitgestellt wird.

8. Verfahren nach einem der vorhergehenden Ansprüche, **dadurch gekennzeichnet, dass**
als Verhaltensparameter (24) ein tatsächliches Verhalten des Geräts (18) erfasst wird.

9. Verfahren nach einem der vorhergehenden Ansprüche, **dadurch gekennzeichnet, dass**
aktuelle Umgebungsbedingungen (22) beim Gerät (18) erfasst werden und beim Adaptieren des Verhaltensmodells (28) berücksichtigt werden.

10. Verfahren nach einem der vorhergehenden Ansprüche,
**dadurch gekennzeichnet, dass**
in Abhängigkeit von der Verhaltensprognose (16) eine Einsatzfähigkeit des Gerätes (18) für einen spezifischen Einsatzzweck bewertet wird.

11. Verfahren nach einem der vorhergehenden Ansprüche,
**dadurch gekennzeichnet, dass**
in Abhängigkeit von der Verhaltensprognose (16) eine Wartung und/oder ein Wartungsintervall für das Gerät (18) vorgeschlagen wird.

12. Verfahren nach einem der vorhergehenden Ansprüche,
**dadurch gekennzeichnet, dass**
in Abhängigkeit von der Verhaltensprognose (16) ein Austausch des Geräts (18) vorgeschlagen wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit einem Computerprogrammprodukt nach Anspruch 13.

15. Elektronische Recheneinrichtung (10) zum Erzeugen einer Verhaltensprognose (16) eines Gerätes (18), mit zumindest einer Erfassungseinrichtung (12) und einer weiteren Erfassungseinrichtung (14), wobei die elektronische Recheneinrichtung (10) zum Durchführen eines Verfahrens nach einem der Ansprüche 1 bis 12 ausgebildet ist.
